# EUROPÄISCHE PATENTSCHRIFT

(11) **EP 0 838 963 B1**
(45) Veröffentlichungstag und Bekanntmachung des Hinweises auf die Patenterteilung: **14.04.2004**
(21) Anmeldenummer: 97116266.4
(22) Anmeldetag: 18.09.1997
(51) Int. Cl.: H04Q 7/32, H04Q 7/38

(54) **Verfahren zum Aktualisieren von Subscriptions-Daten in mobilen Kommunikationsendgeräten**
Method for updating subscription data in mobile communications terminals
Procédé d'actualisation des données d'abonné dans des terminaux de communication mobiles

(30) Priorität: 23.10.1996 DE 19644140
(43) Veröffentlichungstag der Anmeldung: 29.04.1998
(73) Patentinhaber: SIEMENS AKTIENGESELLSCHAFT, 80333 München (DE)
(72) Erfinder: Morper, Hans-Jochen, 85253 Erdweg (DE)

(56) Entgegenhaltungen:
- EP-A- 0 757 501
- WO-A-95/20864
- EUROPEAN TELECOMMUNICATION STANDARD,ETS 300 175-6, XP002072371

## Beschreibung

In zukünftigen Kommunikationsnetzen werden mobile bzw. drahtlose Kommunikationsendgeräte direkt an Kommunikationssysteme oder über Zubringereinrichtungen an Kommunikationssysteme drahtlos angeschlossen. Die Zubringereinrichtungen und die Kommunikationssysteme können hierbei unterschiedlichsten Betreibern zugeordnet sein. Betreiber - in der Fachwelt als Operator bekannt - sind beispielsweise öffentliche Betreiber - z.B. Deutsche Bundespost - oder Betreiber von Privatnetzen - z.B. Firmennetze - und private Betreiber von Kommunikationssystemen im Heim- bzw. Wohnbereich. Ein mobiles Kommunikationsendgerät kann Zugriff zu einem oder mehreren Betreibern bzw. Bereichen besitzen, wozu dieses in den betreffenden Bereichen subskribiert bzw. angemeldet ist.

Hierzu sind in den mobilen Kommunikationsendgeräten Subscriptions-Daten gespeichert. Bei einer DECT-gemäßen Realisierung (Digital Enhanced Cordless Telecommunications) werden die Subscriptions-Daten mit Hilfe einer standardisierten Subskriptions-Registration von der jeweiligen Basisstation bzw. dem Kommunikationsnetz über die DECT-Luftschnittstelle an die jeweiligen mobilen Kommunikationsendgeräte übermittelt.
Nach Änderungen im Kommunikationsnetz sind ggf. die Subscriptions-Daten in den mobilen Kommunikationsendgeräten zu ändern. Hierzu ist für den DECT-Standard eine Aktualisierungsprozedur vorgeschlagen, mit deren Hilfe die Subscriptions-Daten in den mobilen Kommunikationsendgeräten aktualisiert bzw. geändert werden. Diese Aktualisierung der Subscriptions-Daten ist jedoch nur bei den aktivierten bzw. aktiven mobilen Kommunikationsendgeräten möglich. Nicht aktivierte, d. h. nicht eingeschaltete oder mobile Kommunikationsendgeräte, die sich nicht im Bereich der jeweiligen Basisstation befinden, können hinsichtlich der Subscriptions-Daten nicht aktualisiert werden.

Bei einer Aktualisierung der Subscriptions-Daten wird von der jeweiligen Basisstation eine Resubscriptions-Aufforderung jeweils gezielt zu den mobilen Kommunikationsendgeräten ausgesandt. Diese Meldung ist derart ausgestaltet, daß sie in den mobilen Kommunikationsendgeräten als eine Aktualisierungs-Meldung interpretiert wird. Von den Kommunikationsendgeräten wird daraufhin eine Zugriffsanforderungsmeldung an die betroffene Basisstation übermittelt und von dieser werden anschließend im Rahmen einer Accept-Meldung die aktualisierten Subscriptions-Daten übermittelt. Insbesondere sind DECT-gemäße Subcriptions-Daten die Portable Access Right Key PARK, der Park Length Indicator Informationen PLI und die International Portable User Identity IPUI.

Der Erfindung liegt die Aufgabe zugrunde, für die nicht aktivierten mobilen Kommunikationsendgeräte ein Verfahren zur Aktualisierung der in diesen gespeicherten Subscriptions-Daten auszugestalten. Die Aufgabe wird durch die Merkmale des Anspruchs 1 gelöst.

Der wesentliche Aspekt des erfindungsgemäßen Verfahrens ist darin zu sehen, daß nach einer Aktualisierung der Subscriptions-Daten der aktiven mobilen Kommunikationsendgeräte zusätzlich zu der Basisstations- bzw. Kommunikationsidentifikation, die nicht aktualisierte Basisstations- bzw. Kommunikationsidentifikation periodisch in größeren Zeitabständen ausgesandt wird, um nach einer Aktivierung eines inaktiven Kommunikationsendgerätes diesen auch weiterhin den Zugang an das jeweilige Kommunikationssystem zu ermöglichen. Nach dem Aktivieren dieser vormals inaktiven, drahtlosen Kommunikationsendgeräte registrieren sich diese im Kommunikationssystem mittels einer Location Registration Meldung, wobei die Zugriffsberechtigung aus der vom Kommunikationsendgerät empfangenen, nicht aktualisierte Basisstations- bzw. Kommunikationsnetzidentifikation abgeleitet wurde. Hierbei wird vorteilhaft bei einer Realisierung des drahtlosen Anschlusses gemäß dem DECT-Standard die Basisstationsidentifikation als Radio Fixed Part Identifier RFPI realisiert, in dem in einem Primary Access Right Identifier PARI die aktualisierte Basisstations- bzw. Kommunikationsidentifikation und einem Secondary Access Right Identifier SARI die zusätzliche, nicht aktualisierte Basisstations- bzw. Kommunikationsidentifikation enthalten ist - Anspruch 2.

Durch die Mitbenutzung einer vorhandenen Secondary Access Right Identifier-Information kann der DECT-Standard unverändert weiterbenutzt werden. Dies stellt folglich eine besonders wirtschaftliche und einfache zu realisierende Aktualisierung der Subscriptions-Daten von nicht aktiven mobilen Kommunikationsendgeräten dar.

Nach einer vorteilhaften Ausgestaltung des erfindungsgemäßen Verfahrens werden nach der Aktualisierung aller mobilen Kommunikationsendgeräte im Bereich einer Basisstation die zusätzlich nicht aktualisierte Basisstations- bzw. Kommunikationsidentifikation nicht mehr ausgesandt - Anspruch 3.

Der öffentliche Bereich ist vorteilhaft durch ein öffentlichen Kommunikationsnetz und/oder ein öffentliches Mobilfunknetz und der private Bereich durch ein privates Kommunikationsnetz realisiert. Im folgenden wird das erfindungsgemäße Verfahren anhand eines Blockschaltbildes näher erläutert.
Das Blockschaltbild zeigt eine Basisstation BS, die an ein öffentliches oder privates Kommunikationsnetz KN angeschlossen ist. An die Basisstation BS sind drahtlos - beim Ausführungsbeispiel gemäß dem DECT-Standard bzw. gemäß einem CAP-Standard - Kommunikationsendgeräte KE angeschlossen, wobei im Blockschaltbild stellvertretend für die weiteren Kommunikationsendgeräte zwei Kommunikationsendgeräte KE1,2 dargestellt sind. Im Ausführungsbeispiel sei angenommen, daß das erste Kommunikationsendgerät KE1 aktiv und das zweite Kommunikationsendgerät KE2 inaktiv, d. h. stromlos geschaltet ist bzw. sich außerhalb des Funkbereiches des Kommunikationsnetzes KN befindet..

Im ersten Kommunikationsendgerät KE1 , das seine Zugangsberechtigung bez. des Kommunikationsnetzes KN aufgrund des ausgesendeten RFPI erkennt, sind Subscriptions-Daten PARK/PLI gespeichert, die durch eine DECT-gemäße Portable Access Right Key PARK und eine Park-Length-Indicator PLI sowie durch ein Internation Portable User Identification IPUI gebildet sind. Bei einer Aktualisierung dieser Subscriptions-Daten PARK/PLI bzw. IPUI wird von der Basisstation gezielt eine Resubscriptions-Aufforderung (RA) an das beispielsweise erste mobile Kommunikationsendgerät KE1 gesendet. Diese Meldung ist derart ausgestaltet, daß sie vom ersten mobilen Kommunikationsendgerät KE1 als Aktualisierungs-Initialisierung der Subscriptions-Daten PARK/PLI bzw. IPUI interpretiert wird. Vom ersten Kommunikationsendgerät KE1 wird daraufhin eine Aktualisierungsanforderungsmeldung AM an die betroffene Basisstation BS gesendet, worauf von dieser eine Accept-Meldung mit den aktualisierten Subscriptions-Daten PARK/PLI' bzw. IPUI' gesendet wird. Auf die vorhergehend beschriebene Weise werden die in den aktiven Kommunikationsendgeräten KE enthaltenen Subscriptions-Daten PARK/PLI aktualisiert.

Für die Aktualisierung von inaktiven Kommunikationsendgeräten KE2 werden von der Basisstation BS periodisch, jedoch in größeren Zeitabständen, die nicht aktualisierte Basisstations- bzw. Kommunikationsidentifikation ausgesandt. DECT-gemäß werden diese innerhalb des Radio Fixed Part Identifier RFPI als Secondary Access Right Identifier SARI ausgesandt.

Wird ein inaktives mobiles Kommuniktionsendgerät KE2 eingeschaltet, so empfängt das jeweilige nun aktive Kommuniktionsendgerät KE2 neben der nicht bekannten aktualisierten Basisstations- bzw. Kommunikationsidentifikation die nicht aktualisierte Basisstations- bzw. Kommunikationsidentifikation.

Durch das Übermitteln in dem Secondary Access Right Identifier SARI wird dem Kommunikationsendgerät KE2 angezeigt, daß es weiterhin über eine Zugangsberechtigung zum Kommunikationsnetz KN verfügt. Nach der Registrierung des Kommunikationsendgerätes KE2 gegenüber dem Kommunikationsnetz KN mittels Location Registration wird die vorhergehend beschriebene Aktualisierungsprozedur (RA, AM, AC, PARK/PLI', IPUI') eingeleitet und durchgeführt.
Die nicht aktualisierte Basisstations- bzw. Kommunikationsidentifikation PARK/PLI wird so lange ausgesandt, bis die im Bereich der Basisstation BS angeordneten Kommunikationsgeräte KE hinsichtlich ihrer Subscriptions-Daten PARK/PLI bzw. IPUI aktualisiert sind.

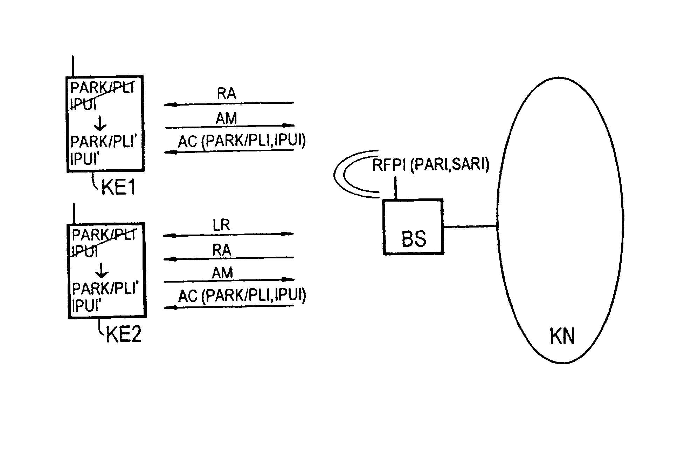

## Patentansprüche

1. Verfahren zum Aktualisieren von Subscriptions-Daten (PARK/PLI bzw. IPUI) von mobilen Kommunikationsendgeräten (KE) in öffentlichen bzw. privaten Kommunikationsnetzen (KN), an deren Basisstationen (BS) die mobilen Kommunikationsendgeräte (KE) drahtlos anschließbar sind,
- bei dem im mobilen Kommunikationsendgerät (KE1, KE2) Subscriptions-Daten (PARK/PLI bzw. IPUI) gespeichert sind und von den Basisstationen (BS) eine Basisstations- bzw. Kommunikationsidentifikation (RFPI) periodisch ausgesandt wird,
- bei dem von den Basisstationen (BS) eine Aktualisierungsprozedur (AM, RA, AC) mit den aktiven, mobilen Kommunikationsendgeräten (KE1) durchführbar ist, wobei die Subscriptions-Daten (PARK/PLI bzw. IPUI) aktualisiert werden und von den Basisstationen (BS) anschließend für das jeweilige Kommunikationsendgerät (KE) die aktualisierte Basisstations- bzw. Kommunikationsidentifikation (RFPI) periodisch ausgesandt wird, **dadurch gekennzeichnet, daß**
- von den Basisstationen (BS) in den Basisstationsidentifikationen (RFPI) zusätzlich die vorhergehende nicht aktualisierte Basisstations- bzw. Kommunikationsidentifikation periodisch in größeren Zeitabständen ausgesandt wird, und
- nach einer Aktivierung eines inaktiven Kommunikationsendgerätes (KE2) diesem durch Aussenden der nicht aktualisierten Basisstations- bzw. Kommunikationsidentifikation weiterhin Zugangsrechte eingeräumt werden, wobei nach einer Registrierung mittels Location Registration (LR) die Aktualisierung der gespeicherten Subscriptionsdaten durchgeführt wird.

2. Verfahren nach Anspruch 1, **dadurch gekennzeichnet, daß** bei einer Realisierung des drahtlosen Anschlusses gemäß dem DECT-Standard die Basisstationsidentifikation (RFPI) als Radio Fixed Part Identifier realisiert ist, in dem in einem Primary Access Right Identifier (PARI) die aktualisierte Basisstations- bzw. Kommunikationsidentifikation und in einem Secondary Access Right Identifier (SARI) die zusätzlichen, nicht aktualisierte Basisstations- bzw. Kommunikationsidentifikation enthalten ist.

3. Verfahren nach Anspruch 1 oder 2, **dadurch gekennzeichnet, daß** nach der Aktualisierung aller mobilen Kommunikationsendgeräte (KE) im Bereich einer Basisstation (BS) die zusätzliche, nicht aktualisierte Basisstations- bzw. Kommunikationsidentifikation nicht mehr ausgesandt wird.

4. Verfahren nach einem der Ansprüche 1 bis 3, **dadurch gekennzeichnet, daß** der öffentliche Bereich durch ein öffentliches Kommunikationsnetz und/oder ein öffentliches Mobilfunknetz und der private Bereich durch ein privates Kommunikationsnetz realisiert ist.

## Claims

1. Method for updating subscription data (PARK/PLI or IPUI) of mobile communications terminals (KE) in public or private communications networks (KN), to whose base stations (BS) the mobile communications terminals (KE) can be wirelessly connected,
- in which method subscription data (PARK/PLI or IPUI) are stored in the mobile communications terminal (KE1, KE2), and a base station identification or communications identification (RFPI) is transmitted periodically by the base stations (BS),
- in which method the base stations (BS) can carry out an updating procedure (AM, RA, AC) with the active, mobile communications terminals (KE1), the subscription data (PARK/PLI or IPUI) being updated and the updated base station identification or communications identification (RFPI) for the respective communications terminal (KE) then being transmitted periodically by the base stations (BS), **characterized in that**
- the base stations (BS) additionally transmit the preceding non-updated base station identification or communications identification in the base station identifications (RFPI) periodically at relatively large time intervals, and,
- after an inactive communications terminal (KE2) has been activated, access rights continue to be granted to the latter by transmitting the non-updated base station identification or communications identification, the updating of the stored subscription data being carried out after a registration by means of Location Registration (LR).

2. Method according to Claim 1, **characterized in that** when the wireless connection is implemented in accordance with the DECT Standard, the base station identification (RFPI) is implemented as a Radio Fixed Part Identifier in which the updated base station identification or communications identification is contained in a Primary Access Right Identifier (PARI), and the additional, non-updated base station identification or communications identification is contained in a Secondary Access Right Identifier (SARI).

3. Method according to Claim 1 or 2, **characterized in that**, after all the mobile communications terminals (KE) in the domain of a base station (BS) have been updated, the additional, non-updated base station identification or communications identification is no longer transmitted.

4. Method according to one of Claims 1 to 3, **characterized in that** the public domain is implemented by means of a public communications network and/or a public mobile radio network and the private domain by means of a private communications network.

## Revendications

1. Procédé pour la mise à jour de données de souscription (PARK/PLI et/ou IPUI) de terminaux de communication mobiles (KE) dans des réseaux de communication (KN) publics et/ou privés, aux stations de base (BS) desquels les terminaux de communication mobiles (KE) peuvent être raccordés sans fil,
- dans lequel des données de souscription (PARK/PLI et/ou IPUI) sont mémorisées dans le terminal de communication mobile (KE₁, KE₂) et une identification de station de base et/ou une identification de communication (RFPI) est émise de façon périodique par les stations de base (BS),
- dans lequel une procédure de mise à jour (AM, RA, AC) peut être effectuée avec les terminaux de communication (KE₁) mobiles et actifs, les données de souscription (PARK/PLI resp. IPUI) étant mises à jour et l'identification de station de base resp. de communication (RFPI) mise à jour étant émise ensuite de façon périodique par les stations de base (BS) pour le terminal de communication (KE) concerné, **caractérisé en ce que**
- les stations de base (BS) émettent dans les identifications de station de base (RFPI) en supplément, de façon périodique à des intervalles de temps assez grands, l'identification de station de base resp. de communication antérieure non mise à jour et,
- après une activation d'un terminal de communication (KE₂) inactif, des droits d'accès sont également accordés à ce terminal par émission de l'identification de station de base resp. de communications non mises à jour, la mise à jour des données de souscription mémorisées étant effectuée après un enregistrement par "Location Registration" (LR).

2. Procédé selon la revendication 1, **caractérisé en ce que**, avec une réalisation du branchement sans fil selon le standard DECT, l'identification de station de base (RFPI) est réalisée comme un Radio Fixed Part Identifier, dans lequel l'identification de station de base et/ou de communication mise à jour est incluse dans un Primary Acces Right Identifier (PARI) et l'identification de station de base et/ou de communication supplémentaire et non mise à jour dans un Secondary Access Right Identifier (SARI).

3. Procédé selon la revendication 1 ou 2, **caractérisé en ce que**, après la mise à jour de tous les terminaux de communication (KE) mobiles dans la zone d'une station de base (BS), l'identification de station de base et/ou de communication non mise à jour n'est plus envoyée.

4. Procédé selon l'une quelconque des revendications 1 à 3, **caractérisé en ce que** le secteur public est réalisé par un réseau de communication public et/ou un réseau public de téléphonie mobile et le secteur privé par un réseau de communication privé.
